# EUROPEAN PATENT APPLICATION

(11) **EP 4 656 968 A1**
(43) Date of publication of application: **03.12.2025**
(21) Application number: 24747353.1
(22) Date of filing: 25.01.2024
(51) Int. Cl.: F24H 15/136, F24D 3/18, F24H 15/219, F24H 15/232, F24H 15/269, F24H 15/296, F24H 15/38, F24H 15/39, F24H 15/421, F24H 15/486

(54) **HEAT PUMP-TYPE HOT-WATER HEATING DEVICE**

(30) Priority: 26.01.2023 JP 2023010232
(71) Applicant: Fujitsu General Limited, Kawasaki-shi, Kanagawa 213-8502 (JP)
(72) Inventor: TAKAOKA, Ryo, Kawasaki-shi, Kanagawa 213-8502 (JP)
(74) Representative: TBK
(86) International application number: PCT/JP2024/002182
(87) International publication number: WO 2024/158029

(57) **Abstract**

There are provided a hot-water outflow-temperature control means configured to control a flow path switching means (6) such that a water-refrigerant heat exchanger (7) functions as a condenser and to drive a compressor (5) such that, when heating operation is performed with at least one of a high-temperature heating terminal (3) and a low-temperature heating terminal (4), a hot-water outflow temperature (h1) reaches the target hot-water outflow temperature set according to a load of the heating operation and a defrosting operation control means configured to control the flow path switching means such that an outdoor heat exchanger (9) functions as a condenser and to drive the compressor to perform defrosting operation of the outdoor heat exchanger. The defrosting operation control means is configured to start the defrosting operation in a state in which the hot-water outflow temperature is higher than the target hot-water outflow temperature when a decrease amount (Δh1) per unit time of the target hot-water outflow temperature has become equal to or more than the threshold.

## Description

### Technical Field

The present invention relates to a heat pump-type hot-water heating device exchanging heat between water and a refrigerant.

### Background Art

As a heat pump-type hot-water heating device exchanging heat between water and a refrigerant, the devices of PTL 1 and PTL 2 are known.

The device of PTL 1 includes a heat exchanger for heating having a heating means, a high-temperature heating terminal (referred to as a high-temperature load terminal in PTL 1), such as an indoor hot air heater, a low-temperature heating device (referred to as a low-temperature load terminal in PTL 1), such as a floor heating device, a circulation path supplying hot water heated by a heat source in the heat exchanger for heating to the high-temperature heating terminal and a low-temperature heating terminal in parallel and refluxing a condensate flowing out of each terminal to the heat exchanger for heating by a circulation pump, and an operation control means controlling the heating means and the circulation pump. The operation control means is configured not to give a feeling of discomfort, such as cold, to a user by controlling a compressor to achieve a hot-water outflow temperature according to the required temperature of each terminal in single operation of the high-temperature heating terminal or the low-temperature heating device or by controlling the compressor to achieve a hot-water outflow temperature according to the high-temperature heating terminal in simultaneous operation of the high-temperature heating terminal and the low-temperature heating device.

The device of PTL 2 includes a compressor, a flow path switching means, a water-refrigerant heat exchanger exchanging heat between water and a refrigerant, an expansion valve, a heat source-side heat exchanger, a refrigerant circuit connecting them to circulate a refrigerant, a hot water supply circuit circulating hot water by the action of a circulation pump among a heating device and a hot water supply terminal installed indoor and the water-refrigerant heat exchanger, and a control means controlling the compressor and the flow path switching means. The control means is configured such that, when a defrosting operation start condition indicating that frost has adhered to the heat source-side heat exchanger is satisfied, the control means controls the flow path switching means to switch the refrigerant circuit to a cooling cycle and controls the compressor to thereby perform defrosting operation of defrosting the heat source-side heat exchanger.

A device is conceivable in which the technology of PTL 2 is combined with the technology of PTL 1 such that the defrosting operation of PTL 2 can be performed in the device of PTL 1. This device can perform simultaneous operation of the high-temperature heating terminal and the low-temperature heating terminal or the single operation and can perform the defrosting operation when frost has adhered to the heat source-side heat exchanger.

### Citation List

### Patent Literatures

PTL 1: JP 2001-108249 A
PTL 2: JP 2016-156602 A

### Summary of Invention

### Technical Problem

However, when the simultaneous operation of the high-temperature heating terminal and the low-temperature heating terminal is switched to the single operation of the low-temperature heating terminal in the device obtained by combining the technology of PTL 2 with the technology of PTL 1, the hot-water outflow temperature is controlled to a temperature according to the required temperature of the low-temperature heating terminal, and therefore the hot-water outflow temperature is lower than that in the operation of the high-temperature heating terminal. More specifically, when the defrosting operation is performed after such operation switching is performed, the amount of heat supplied by the water-refrigerant heat exchanger decreases, and therefore the defrosting time is prolonged. Further, the defrosting operation removes the amount of heat of the hot water and lowers the hot water temperature in the hot-water circulation circuit, and therefore it takes time for the hot-water outflow temperature to reach the target temperature when the heating operation returns after the completion of the defrosting.

Thus, the present invention has been made to solve such problems. It is an object of the present invention to provide a heat pump-type hot-water heating device capable of efficiently performing the defrosting operation and the adjustment of the hot-water outflow temperature when the required hot-water outflow temperature decreases.

### Solution to Problem

One aspect of the invention is a heat pump-type hot-water heating device including: a refrigerant circuit where a compressor, a flow path switching means, a water-refrigerant heat exchanger configured to exchange heat between water and a refrigerant, and an outdoor heat exchanger are connected by a pipe; a hot-water circulation circuit where the water-refrigerant heat exchanger, a water pump, a low-temperature heating terminal, and a high-temperature heating terminal are connected by a pipe and by an action of the water pump configured to supply hot water from the water-refrigerant heat exchanger to the low-temperature heating terminal and the high-temperature heating terminal in parallel and reflux a condensate from each heating terminal to the water-refrigerant heat exchanger; a hot-water outflow temperature detecting means configured to detect the hot-water outflow temperature of hot water that has passed through the water-refrigerant heat exchanger; a hot-water outflow-temperature control means configured to control the flow path switching means such that the water-refrigerant heat exchanger functions as a condenser and to drive the compressor such that, when heating operation is performed with at least one of the high-temperature heating terminal and the low-temperature heating terminal, the hot-water outflow temperature reaches a target hot-water outflow temperature set according to a load of the heating operation; and a defrosting operation control means configured to control the flow path switching means such that the outdoor heat exchanger functions as a condenser and to drive the compressor to perform defrosting operation of the outdoor heat exchanger, in which the defrosting operation control means is configured to start the defrosting operation in a state in which the hot-water outflow temperature is higher than the target hot-water outflow temperature when the decrease amount per unit time of the target hot-water outflow temperature has become equal to or more than the decrease amount threshold.

### Advantageous Effects of Invention

The heat pump-type hot-water heating device of the present invention can efficiently perform the defrosting operation and the hot-water outflow temperature adjustment, when the required hot-water outflow temperature decreases.

### Brief Description of Drawings

FIG. 1 is a circuit diagram illustrating a heat pump-type hot-water heating device according to the present invention;
FIG. 2 is a flowchart when simultaneous operation of indoor heating operation and floor heating operation is switched to single operation of the floor heating in the heat pump-type hot-water heating device of the present invention;
FIG. 3 is a flowchart illustrating a specific action of defrosting operation start processing in the flowchart in FIG. 2;
FIG. 4 is a flowchart illustrating a specific action of defrosting operation end processing in the flowchart in FIG. 2;
FIG. 5 is a time chart of the heat pump-type hot-water heating device according to the present invention;
FIG. 6 is a time chart of a conventional heat pump-type hot-water heating device; and
FIG. 7 is a flowchart illustrating another embodiment of the defrosting operation end processing according to the present invention.

### Description of Embodiments

Next, embodiments according to the present invention are described with reference to the drawings. The embodiments described below exemplify devices or methods for embodying the technical idea of the present invention. The technical idea of the present invention does not specify the materials, shapes, structures, arrangement, and the like of constituent components to the materials, shapes, structures, arrangement, and the like described below. The technical idea of the present invention can be variously altered in the technical scope defined by claims.

### [Heat pump-type hot-water heating device]

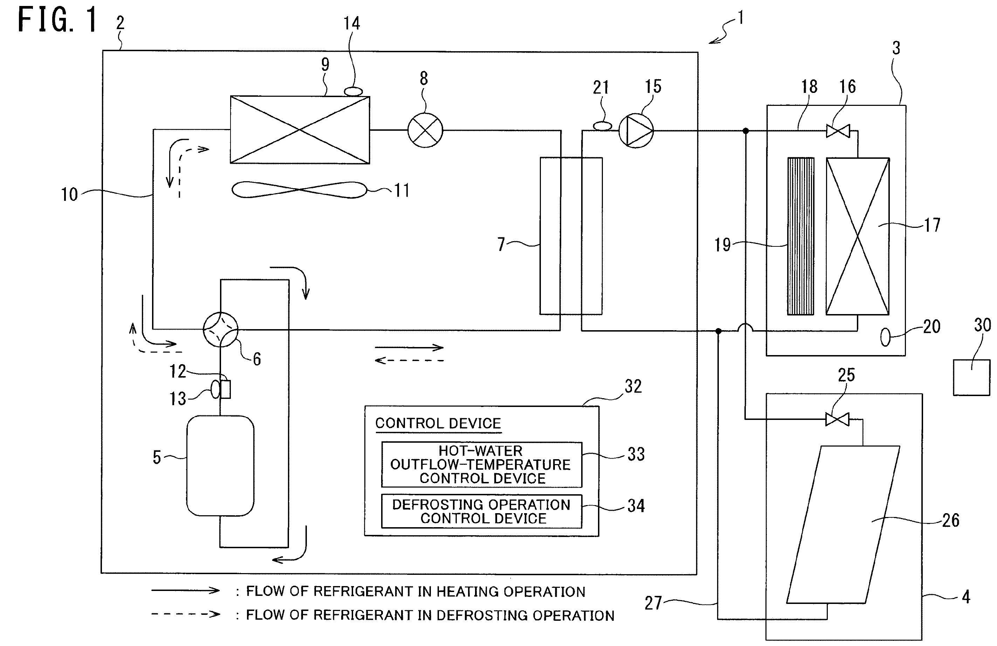

FIG. 1 is a circuit diagram illustrating a heat pump-type hot-water heating device 1 of a first embodiment according to the present invention.

The heat pump-type hot-water heating device 1 includes an outdoor unit 2, an indoor heating device 3, and a floor heating device 4. The indoor heating device 3 corresponds to the high-temperature heating terminal of the present invention. The floor heating device 4 corresponds to the low-temperature heating terminal of the present invention.

In the outdoor unit 2, a compressor 5, a four-way valve 6, a water-refrigerant heat exchanger 7 exchanging heat between water and a refrigerant, an expansion valve 8, and an outdoor heat exchanger 9 are sequentially connected by a pipe, forming a refrigerant circuit 10. The four-way valve 6 corresponds to the flow path switching means of the present invention.

The outdoor unit 2 is provided with an outdoor fan 11 blowing the outside air to the outdoor heat exchanger 9. On the discharge side of the compressor 5, a discharge pressure sensor 12 detecting the discharge pressure of the refrigerant and a discharge temperature sensor 13 detecting the refrigerant temperature on the discharge side of the compressor 5 are provided. Further, in a case where the outdoor heat exchanger 9 functions as an evaporator, a refrigerant temperature sensor 14 is provided which measures the temperature of a refrigerant that has been subjected to heat exchange in the outdoor heat exchanger 9.

As a refrigerant circulating through the refrigerant circuit 10 of the outdoor unit 2, R290 (propane) is used, for example.

The indoor heating device 3 includes an indoor-heating flow-rate regulating valve 16 and an indoor heat exchanger 17, and the water-refrigerant heat exchanger 7 and the water pump 15 of the outdoor unit 2, the indoor-heating flow-rate regulating valve 16, and the indoor heat exchanger 17 are sequentially connected by a pipe, forming a first hot-water circulation circuit 18. The indoor heat exchanger 17 corresponds to the high-temperature heating terminal of the present invention. It is configured such that, by the drive of the water pump 15, hot water that has been subjected to heat exchange with a refrigerant by the water-refrigerant heat exchanger 7 is supplied to the indoor heat exchanger 17 to exchange heat with the indoor air, and then returns to the water-refrigerant heat exchanger 7. The indoor heating device 3 is further provided with an indoor fan 19 blowing air that has been subjected to heat exchange by the indoor heat exchanger 17 into a room and a room temperature sensor 20. Between the water-refrigerant heat exchanger 7 and the water pump 15, a hot-water outflow temperature sensor 21 detecting the temperature of hot water is provided. The hot-water outflow temperature sensor 21 corresponds to the hot-water outflow temperature detection means of the present invention.

In the floor heating device 4, one end of a pipe is connected to the first hot-water circulation circuit 18 between the water pump 15 and the indoor heat exchanger 17, the other end of the pipe is connected to the first hot-water circulation circuit 18 between the indoor heat exchanger 17 and the water-refrigerant heat exchanger 7, and a floor-heating flow-rate regulating valve 25 and a floor heating panel 26 are connected in series between the one end and the other end of the pipe, forming a second hot-water circulation circuit 27. The floor heating panel 26 corresponds to the low-temperature heating terminal of the present invention. It is configured such that, by the drive of the water pump 15, the hot water that has been subjected to heat exchange with a refrigerant by the water-refrigerant heat exchanger 7 is supplied to the floor heating panel 26, exchanges heat with the indoor air, and then returns to the water-refrigerant heat exchanger 7. Thus, when the water pump 15 is driven, hot water is supplied from the water-refrigerant heat exchanger 7 to the indoor heat exchanger 17 and the floor heating panel 26 in parallel, and the hot water returns from the indoor heat exchanger 17 and the floor heating panel 26 to the water-refrigerant heat exchanger 7. Herein, the action in which the hot water returns from the indoor heat exchanger 17 and the floor heating panel 26 to the water-refrigerant heat exchanger 7 is referred to as condensing in the present invention. The first hot-water circulation circuit 18 and the second hot-water circulation circuit 27 correspond to the hot-water circulation circuit of the present invention.

The heat pump-type hot-water heating device 1 of this embodiment includes a controller 30 with which a user operates indoor heating/floor heating and inputs the set temperature in the indoor heating/the floor heating and a control means 32 controlling devices of the heat pump-type hot-water heating device 1 in response to an operation signal input from the controller 30.

Into the control means 32, the temperatures detected by the discharge temperature sensor 13, the refrigerant temperature sensor 14, the room temperature sensor 20, and the hot-water outflow temperature sensor 21 and the refrigerant pressure detected by the discharge pressure sensor 12 are input. The control means 32 performs various kinds of control related to the operation of the heat pump-type hot-water heating device 1, such as switching control of the four-way valve 6, drive control of the water pump 15, opening degree control of the expansion valve 8, opening degree control of the indoor-heating flow-rate regulating valve 16 and the floor-heating flow-rate regulating valve 25, and drive control of the compressor 5, based on the detected values of the sensors. The control means 32 further includes a timer unit measuring time, a table for determining the rotational speed of the compressor, and a storage unit storing a control program of the heat pump-type hot-water heating device 1.

The control means 32 of the heat pump-type hot-water heating device 1 of this embodiment has a hot-water outflow-temperature control means 33 and a defrosting operation control means 34 as illustrated in FIG. 1. The hot-water outflow-temperature control means 33 and the defrosting operation control means 34 can be realized by software as functions of the control means 32.

The heat pump-type hot-water heating device 1 of this embodiment starts single operation of the floor heating when a user selects the single operation of the floor heating in operation of the controller 30, starts single operation of the indoor heating when a user selects the single operation of the indoor heating in operation of the controller 30, and starts simultaneous operation of the indoor heating and the floor heating when a user selects the simultaneous operation of the indoor heating and the floor heating in operation of the controller 30. Herein, the heat pump-type hot-water heating device 1 of this embodiment is configured such that defrosting operation of defrosting the outdoor heat exchanger 9 is automatically started when indoor heating operation has continued for the predetermined time described later or more after the simultaneous operation of the indoor heating and the floor heating has been switched to the single operation of the floor heating.

### [Single operation of floor heating]

In the single operation of the floor heating, the control means 32 controls the drive of the water pump 15 by the predetermined rotational speed set according to a load of the floor heating operation, controls the indoor-heating flow-rate regulating valve 16 to be in a closed state, and controls the floor-heating flow-rate regulating valve 25 to be in an open state. This circulates hot water between the water-refrigerant heat exchanger 7 and the floor heating panel 26 of the second hot-water circulation circuit 27.

The control means 32 switches the four-way valve 6 such that the refrigerant circuit 10 is brought into a heating cycle. Specifically, the control means 32 switches the four-way valve 6 such that the discharge side of the compressor 5 and the water-refrigerant heat exchanger 7 are connected and the suction side of the compressor 5 and the outdoor heat exchanger 9 are connected, so that a refrigerant flows in the direction indicated by the solid lines in FIG. 1. Thus, the water-refrigerant heat exchanger 7 functions as a condenser and the outdoor heat exchanger 9 functions as an evaporator. The control means 32 determines the rotational speed of the compressor 5 for the single operation of the floor heating corresponding to a target floor-heating temperature referring to the table stored in advance in the storage unit and controls the drive of the compressor 5 by the rotational speed, the target floor-heating temperature being set based on a difference between the set temperature of the single operation of the floor heating set by a user and the indoor temperature detected by the room temperature sensor 20. A target floor-heating temperature TL of the single operation of the floor heating is set to 30°C to 50°C, for example, according to the load of the floor heating operation. The target floor-heating temperature TL corresponds to the target hot-water outflow temperature of the present invention.

### [Single operation of indoor heating]

In the single operation of the indoor heating, the hot-water outflow-temperature control means 33 controls the indoor-heating flow-rate regulating valve 16 to be in an open state and controls the floor-heating flow-rate regulating valve 25 to be in a closed state. Then, the drive of the water pump 15 is controlled by the predetermined rotational speed set according to a load of the indoor heating operation, thereby circulating hot water between the water-refrigerant heat exchanger 7 and the indoor heat exchanger 17 of the first hot-water circulation circuit 18.

The hot-water outflow-temperature control means 33 switches the four-way valve 6 such that the refrigerant circuit 10 is brought into a heating cycle as with the single operation of the floor heating described above. Then, a target indoor-heating temperature is set based on a difference between the set temperature of the single operation of the indoor heating set by a user and the indoor temperature detected by the room temperature sensor 20, the rotational speed of the compressor 5 for the single operation of the indoor heating corresponding to the target indoor-heating temperature is determined referring to the table stored in advance in the storage unit, and the drive of the compressor 5 is controlled by the rotational speed. A target indoor-heating temperature TH of the single operation of the indoor heating is set to 60°C to 80°C, for example, according to the load of the indoor heating operation. The target indoor-heating temperature TH corresponds to the target hot-water outflow temperature of the present invention.

### [Simultaneous operation of indoor heating operation and floor heating operation]

In the simultaneous operation of the indoor heating operation and the floor heating operation, the hot-water outflow-temperature control means 33 controls the opening degrees of the indoor-heating flow-rate regulating valve 16 and the floor-heating flow-rate regulating valve 25 such that the flow ratio between the hot water flowing through the first hot-water circulation circuit 18 and the hot water flowing through the second hot-water circulation circuit 27 approaches the ratio between the load of the indoor heating operation and the load of the floor heating operation. Then, the drive of the water pump 15 is controlled by the predetermined rotational speed set according to the load of the indoor heating operation and the load of the floor heating operation, so that hot water is circulated between the water-refrigerant heat exchanger 7 and the indoor heat exchanger 17 of the first hot-water circulation circuit 18 and between the water-refrigerant heat exchanger 7 and the floor heating panel 26 of the second hot-water circulation circuit 27.

The hot-water outflow-temperature control means 33 switches the four-way valve 6 such that the refrigerant circuit 10 is brought into a heating cycle. Then, a difference between the target indoor-heating temperature TH, which has a higher target temperature of the target indoor-heating temperature TH and the target floor-heating temperature TL, and the indoor temperature detected by the room temperature sensor 20 is determined, the rotational speed of the compressor 5 for the simultaneous operation of the indoor heating and the floor heating is determined referring to the table stored in advance in the storage unit, and the drive of the compressor 5 is controlled by the rotational speed.

### [Defrosting operation]

In the defrosting operation, the defrosting operation control means 34 stops the compressor 5 and the outdoor fan 11 and switches the four-way valve 6 such that the refrigerant circuit 10 is brought into a cooling cycle. Specifically, the defrosting operation control means 34 switches the four-way valve 6 such that the discharge side of the compressor 5 and the outdoor heat exchanger 9 are connected and the suction side of the compressor 5 and the water-refrigerant heat exchanger 7 are connected, and controls a refrigerant to flow in the direction indicated by the dashed lines in FIG. 1, the outdoor heat exchanger 9 to function as a condenser, and the water-refrigerant heat exchanger 7 to function as an evaporator. The defrosting operation control means 34 stops the indoor fan 19, controls the floor-heating flow-rate regulating valve 25 to be in a closed state, and controls the drive of the water pump 15 by a rotational speed similar to that in the heating operation before the start of the defrosting operation such that hot water circulates between the water-refrigerant heat exchanger 7 and the indoor heat exchanger 17 of the first hot-water circulation circuit 18. Then, the defrosting operation control means 34 determines the rotational speed of the compressor 5 for the defrosting operation referring to the table stored in advance in the storage unit and controls the drive of the compressor 5 by the rotational speed, thereby performing the defrosting operation.

Herein, the defrosting operation control means 34 is configured to start the defrosting operation when a target hot-water outflow-temperature decrease amount Δh1 per unit time has becomes equal to or more than the preset decrease amount threshold. The decrease amount threshold is a decrease amount of the target hot-water outflow temperature indicating that the hot-water outflow temperature can be adjusted to the target hot-water outflow temperature in a short period of time. The control means 32 starts the defrosting operation when it takes time to regulate the hot-water outflow temperature to the target hot-water outflow temperature. More specifically, it is configured such that, when the target hot-water outflow-temperature decrease amount Δh1 is equal to or more than the decrease amount threshold, excess heat released to reduce the hot-water outflow temperature to the target hot-water outflow temperature is utilized for the defrosting operation. The defrosting operation control means 34 is configured to end the defrosting operation when a refrigerant-temperature increase amount Δh2 per unit time of a refrigerant temperature t2 detected by the refrigerant temperature sensor 14 has become equal to or more than the preset increase amount threshold. The increase amount threshold is the increase change amount of the refrigerant temperature indicating that frost generated in the outdoor heat exchanger 9 has completely melted. The control means 32 is configured to end the defrosting operation when a condition indicating that the frost has completely melted is satisfied.

### [Method for operating heat pump-type hot-water heating device]

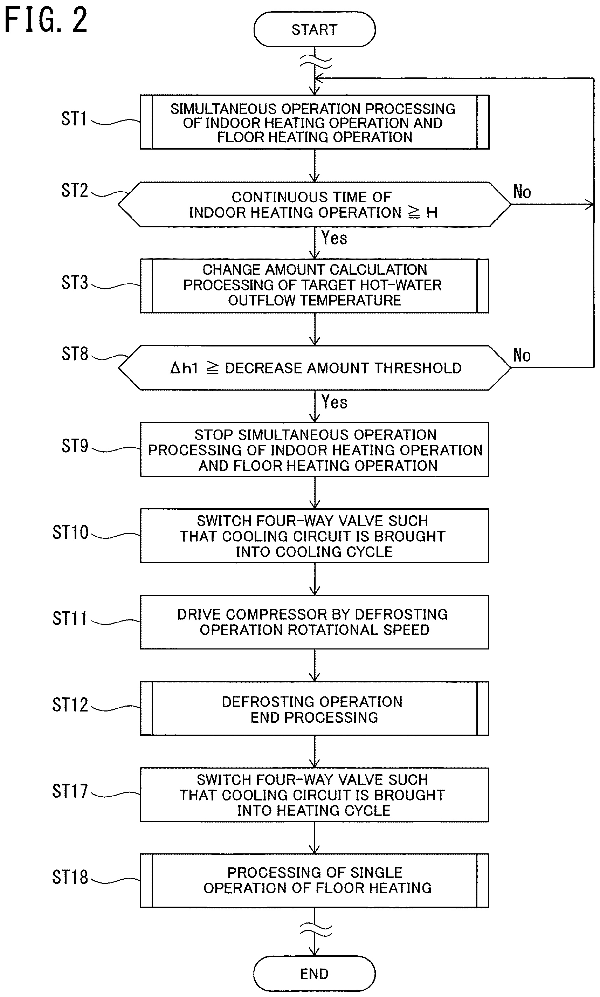

Next, an operation method when the heat pump-type hot-water heating device 1 of this embodiment is performing the simultaneous operation of the indoor heating operation and the floor heating operation is described with reference to the flowcharts in FIGS. 2 to 4.

In the following description, a detailed description is given taking a case where a user selects the single operation of the floor heating from the simultaneous operation of the indoor heating operation and the floor heating operation as an example. The hot-water outflow-temperature control means 33 is assumed to perform similar control for any hot-water outflow temperature adjustment occurring as a result of a setting change by a user.

First, in Step ST1 in FIG. 2, the simultaneous operation of the indoor heating operation and the floor heating operation is performed.

Next, in Step ST2, it is determined whether continuous operation of continuously performing the indoor heating operation without stopping is equal to or more than a time H (e.g., 0.5 hours) or more. In this determination, when the continuous operation of the indoor heating operation falls below the time H, the process proceeds to Step ST1 and when the continuous operation of the indoor heating operation is equal to or more than the time H, the process proceeds to Step ST3.

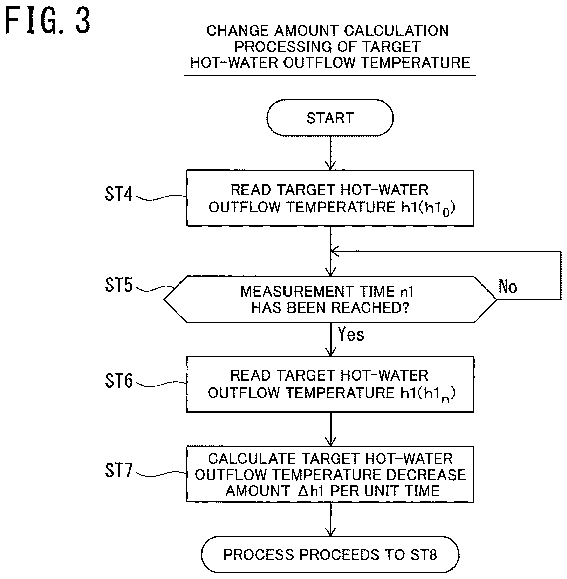

In Step ST3, change amount calculation processing of the target hot-water outflow temperature illustrated in FIG. 3 is performed. In the change amount calculation processing of the target hot-water outflow temperature, a target hot-water outflow temperature h1 input into the controller 30 is read in Step ST4 in FIG. 3. Next, in Step ST5, it is determined whether a predetermined measurement time n1 (e.g., 10 seconds), in which a change in the target hot-water outflow temperature is sufficiently reflected, has elapsed from the time when the target hot-water outflow temperature h1 has been read. Then, when the measurement time n1 has elapsed, the process proceeds to Step ST6 and the target hot-water outflow temperature h1 is read. Next, in Step ST7, the target hot-water outflow-temperature decrease amount from a target hot-water outflow temperature h10 at the start of the measurement to a target hot-water outflow temperature h1n at the current time is calculated, and then the target hot-water outflow-temperature decrease amount is divided by the measurement time n1, thereby calculating the target hot-water outflow-temperature decrease amount Δh1 per unit time. For example, when a user selects the single operation of the floor heating from the simultaneous operation of the indoor heating operation and the floor heating operation, the target hot-water outflow-temperature decrease amount Δh1 per unit time becomes larger than that when the simultaneous operation of the indoor heating operation and the floor heating operation continues.

In Step ST8 in FIG. 2 to which the process proceeds after Step ST7 in FIG. 3, it is first determined whether the target hot-water outflow-temperature decrease amount Δh1 per unit time is equal to or more than the decrease amount threshold, and then it is determined that, when the hot-water outflow-temperature decrease amount Δh1 per unit time falls below the decrease amount threshold, the adjustment of the hot-water outflow temperature can be performed in a short period of time, so that the process proceeds to Step ST1, and then it is determined that, when the target hot-water outflow-temperature decrease amount Δh1 per unit time is equal to or more than the decrease amount threshold, it takes time to perform the adjustment of the hot-water outflow temperature, so that the process proceeds to Step ST9 in FIG. 2.

In Step ST9, the simultaneous operation of the indoor heating operation and the floor heating operation is stopped. Next, in Step ST10, the switching of the four-way valve 6 is controlled such that the refrigerant circuit 10 is brought into a cooling cycle.

Next, in Step ST11, the rotational speed of the compressor 5 in the cooling cycle is determined referring to the table stored in advance in the storage unit, and the drive of the compressor 5 is controlled by the rotational speed.

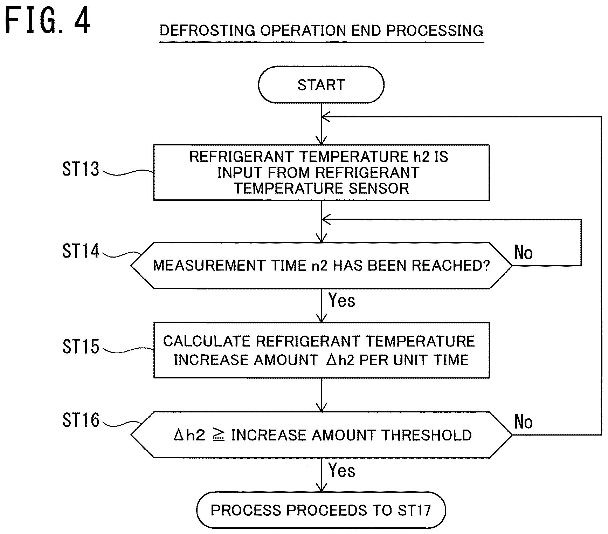

Next, in Step ST12, the defrosting operation end processing illustrated in FIG. 4 is performed. In the defrosting operation end processing in FIG. 4, a refrigerant temperature h2 is first input from the refrigerant temperature sensor 14 in Step ST13. Next, in Step ST14, it is determined whether a predetermined measurement time n2 (e.g., 10 seconds), in which a change in the refrigerant temperature is sufficiently reflected, has elapsed from the time when the refrigerant temperature h2 has been input. Then, when the measurement time n2 has elapsed, the process proceeds to Step ST15.

In Step ST15, the refrigerant-temperature increase amount from a refrigerant temperature h20 at the start of the measurement to a refrigerant temperature h2n at the current time n2 is calculated, and the refrigerant-temperature increase amount is divided by the measurement time n2, thereby calculating the refrigerant-temperature increase amount Δh2 per unit time. Next, in Step ST16, it is determined whether the refrigerant-temperature increase amount Δh2 per unit time is equal to or more than the increase amount threshold, and then it is determined that, when the refrigerant-temperature increase amount Δh2 per unit time falls below the increase amount threshold, frost generated in the outdoor heat exchanger 9 does not melt and remains, so that the process proceeds to Step ST13, and then it is determined that, when the refrigerant-temperature increase amount Δh2 per unit time is equal to or more than the increase amount threshold, frost generated in the outdoor heat exchanger 9 has completely melted, so that the process proceeds to Step ST17 in FIG. 2.

Then, in Step ST17 in FIG. 2, the switching of the four-way valve 6 is controlled such that the refrigerant circuit 10 is brought into a heating cycle. Next, in Step ST18, the control means 32 starts the single operation of the floor heating.

### [Defrosting operation and Adjustment of hot-water outflow temperature of heat pump-type hot-water heating device]

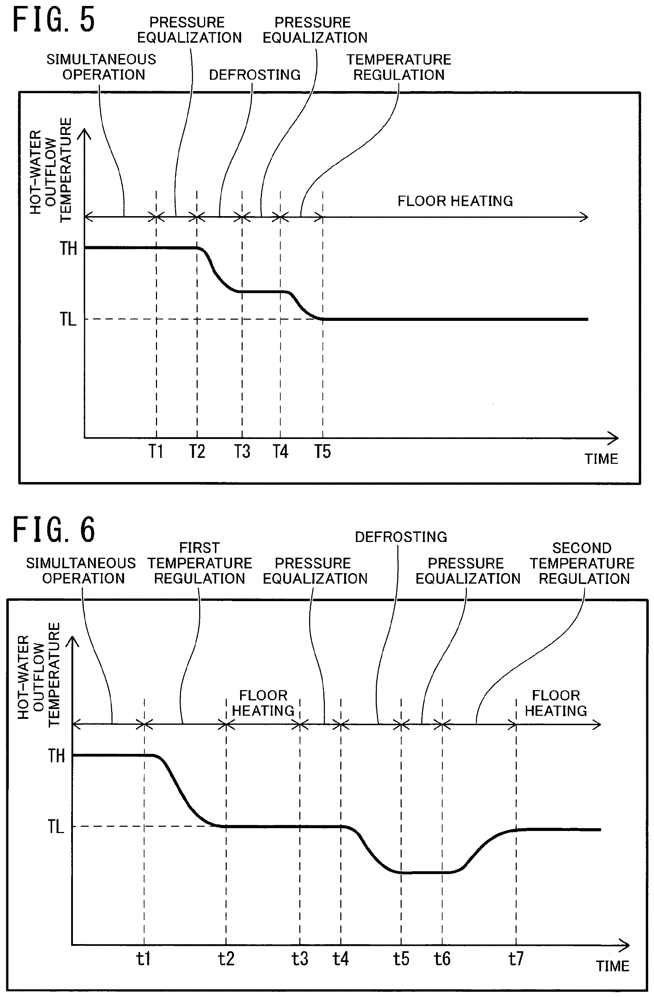

Next, the defrosting operation and the adjustment of the hot-water outflow temperature of adjusting the hot-water outflow temperature to the target hot-water outflow temperature of the heat pump-type hot-water heating device 1 in this embodiment are described by comparing the time chart in this embodiment illustrated in FIG. 5 with the time chart of the action of a conventional device illustrated in FIG. 6.

In the time chart in this embodiment in FIG. 5, the "pressure equalization" is pressure equalization processing of the refrigerant circuit 10. The pressure equalization processing is processing of equalizing the refrigerant pressure on the high pressure side (refrigerant discharge side of the compressor 5) and the refrigerant pressure on the low pressure side (refrigerant suction side of the compressor 5) of the refrigerant circuit 10, when the refrigerant circuit 10 is switched from the heating cycle to the cooling cycle or from the cooling cycle to the heating cycle. Therefore, the control means 32 continues to stop the compressor 5 for a predetermined pressure equalization time during which the refrigerant pressure on the high pressure side and the refrigerant pressure on the low pressure side are equalized. The "pressure equalization" in the time chart of the conventional device in FIG. 6 is also the same processing. In FIGS. 5 and 6, the simultaneous operation of the indoor heating operation and the floor heating operation is indicated as "simultaneous operation", the defrosting operation is indicated as "defrosting", and the single operation of the floor heating is indicated as "floor heating".

In the heat pump-type hot-water heating device 1 in this embodiment illustrated in FIG. 5, the continuous operation time of the indoor heating operation is assumed to exceed the time H (e.g., 0.5 hours). A user is assumed to select the single operation of the floor heating from the simultaneous operation of the indoor heating operation and the floor heating operation.

The hot-water outflow-temperature control means 33 carries out a comparison between the target hot-water outflow-temperature decrease amount Δh1 per unit time and the decrease amount threshold at a time T1. At this time, due to the fact that a user has selected the single operation of the floor heating from the simultaneous operation of the indoor heating operation and the floor heating operation, the target hot-water outflow-temperature decrease amount Δh1 is equal to or more than the decrease amount threshold. When the defrosting operation control means 34 determines that the target hot-water outflow-temperature decrease amount Δh1 per unit time has become equal to or more than the decrease amount threshold (Step ST8), the defrosting operation control means 34 stops the simultaneous operation of the indoor heating operation and the floor heating operation (Step ST9), performs the pressure equalization processing from the time T1 to a time T2, and then starts the defrosting operation (Steps ST10, 11). When the defrosting operation has been started, the hot-water outflow temperature decreases by the heat exchange of the hot water of the water-refrigerant heat exchanger 7 with a refrigerant as shown from the time T2 to a time T3.

Then, the defrosting operation control means 34 ends the defrosting operation by determining that the refrigerant-temperature increase amount Δh2 per unit time has become equal to or more than the increase amount threshold at the time T3 (Step ST16) and that frost generated in the outdoor heat exchanger 9 has completely melted.

The hot-water outflow-temperature control means 33 performs the pressure equalization processing from the time T3 to a time T4, switches the four-way valve 6 such that the refrigerant circuit 10 is brought into a heating cycle (Step ST17), controls the drive of the compressor 5 by the rotational speed for the single operation of the floor heating, and starts the single operation of the floor heating when the hot-water outflow temperature has reached the target floor-heating temperature TL at a time T5 (Step ST18).

The conventional device in FIG. 6 has substantially the same device configuration as that of the heat pump-type hot-water heating device 1 in this embodiment, and the outdoor heat exchanger 9 in this embodiment and the outdoor heat exchanger of the conventional device are assumed to have almost the same frosting amount as that in this embodiment illustrated in FIG. 5. The conventional device reduces the hot-water outflow temperature to the target floor-heating temperature TL, and then performs the defrosting operation, when switching the simultaneous operation of the indoor heating operation and the floor heating operation to the single operation of the floor heating.

More specifically, the conventional device stops the simultaneous operation of the indoor heating operation and the floor heating operation at a time t1 in FIG. 6, and then performs first temperature regulation of reducing the hot-water outflow temperature to the target floor-heating temperature TL until a time t2. Then, the conventional device performs the single operation of the floor heating and the pressure equalization processing from the time t2 to a time t4, and then performs the defrosting operation from the time t4 to a time t5. In this defrosting operation, the hot-water outflow temperature decreases to a value that significantly falls below the target floor-heating temperature TL. Then, the conventional device performs the pressure equalization processing from time the time t5 to a time t6, increases the hot-water outflow temperature to the target floor-heating temperature TL by second temperature regulation from the time t6 to a time t7, and starts the single operation of the floor heating at the time when the hot-water outflow temperature has reached the target floor-heating temperature TL.

In the conventional device illustrated in FIG. 6, the hot-water outflow temperature is set to the target floor-heating temperature TL in the defrosting operation from the time t4 to the time t5 and the amount of heat to be subjected to heat exchange from the hot water of the water-refrigerant heat exchanger to a refrigerant is small, and therefore the defrosting time (from the time t5 to the time t4) is prolonged.

In contrast thereto, in the heat pump-type hot-water heating device 1 in this embodiment, the hot-water outflow temperature of the hot water of the water-refrigerant heat exchanger 7 is set to a temperature higher than the target floor-heating temperature TL in the defrosting operation from the time T2 to the time T3 and excess heat of the hot water of the water-refrigerant heat exchanger 7 to be released to reduce the hot-water outflow temperature can be supplied to a refrigerant, and therefore the defrosting time (time from the time T3 to the time T2) can be shortened.

In the conventional heat pump-type hot-water heating device illustrated in FIG. 6, when the hot-water outflow temperature decreases to a value that falls below the target floor-heating temperature TL in the defrosting operation and the single operation of the floor heating is performed after the end of the defrosting operation, the time to increase the hot-water outflow temperature to the target floor-heating temperature TL is prolonged. In contrast thereto, the heat pump-type hot-water heating device 1 in this embodiment does not require the time to increase the hot-water outflow temperature to the target floor-heating temperature TL because the hot-water outflow temperature does not decrease to the target floor-heating temperature TL or less in the defrosting operation.

### [Advantageous effects of this embodiment]

Accordingly, in the heat pump-type hot-water heating device 1 in this embodiment, the hot-water outflow temperature is set to a temperature higher than the target floor-heating temperature TL in the defrosting operation, so that the defrosting time can be shortened by increasing the amount of heat to be subjected to heat exchange from the hot water of the water-refrigerant heat exchanger 7 to a refrigerant, and therefore the defrosting operation can be efficiently performed.

Further, in the heat pump-type hot-water heating device 1 in this embodiment, the hot-water outflow temperature does not decrease to the target floor-heating temperature TL or less in the defrosting operation, so that the time for increasing the hot-water outflow temperature to the target floor-heating temperature TL as in the conventional device is not required, and therefore the time for the hot-water outflow temperature to reach the target floor-heating temperature TL is shortened when the single operation of the floor heating is performed after the end of the defrosting operation and the adjustment of the hot-water outflow temperature can be efficiently performed.

Further, the defrosting operation is carried out when the target hot-water outflow-temperature decrease amount Δh1 per unit time is equal to or more than the decrease amount threshold, and therefore a state in which the hot-water outflow temperature is close to the target floor-heating temperature TL can be maintained, and thus indoor comfort can be maintained.

Further, a state in which frost generated in the outdoor heat exchanger 9 has completely melted can be correctly determined by a comparison between the refrigerant-temperature increase amount Δh2 per unit time and the increase amount threshold, and therefore the end of the defrosting operation time can be accurately performed.

Further, when the continuous operation of the indoor heating operation does not exceed the time H, the defrosting operation is not performed, and therefore the energy saving performance can be improved.

When R290 (propane) is used as the refrigerant, the heat pump-type hot-water heating device 1 in this embodiment can perform the heating operation at a higher condensation temperature because the R290 (propane) has a higher critical temperature than that of a refrigerant, such as R410A or R32. Therefore, the target indoor-heating temperature TH of the single operation of the indoor heating can be set to a high temperature. On the other hand, the target floor-heating temperature TL cannot be set to a high temperature to ensure safety, e.g., to prevent burns, and therefore a temperature difference between the target indoor-heating temperature TH and the target floor-heating temperature TL becomes large. The larger the temperature difference between the target indoor-heating temperature TH and the target floor-heating temperature TL, the larger the excess heat released to reduce the hot-water outflow temperature. The higher the target indoor-heating temperature TH and the larger the excess heat generated by the adjustment of the hot-water outflow temperature, the larger the amount of heat to be subjected to heat exchange from the hot water of the water-refrigerant heat exchanger 7 to the refrigerant, and therefore the defrosting time is shortened. Accordingly, as the critical temperature of the refrigerant to be used is higher, the defrosting operation and the hot-water outflow temperature adjustment can be efficiently performed.

### [Another embodiment of defrosting operation end processing]

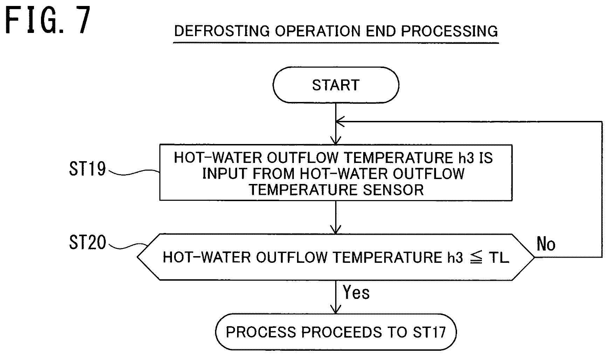

Next, FIG. 7 illustrates another embodiment of the defrosting operation end processing performed by the defrosting operation control means 34 illustrated in Step ST12 in FIG. 2.

In the defrosting operation end processing in FIG. 7, a hot-water outflow temperature h3 is first input from the hot-water outflow temperature sensor 21 in Step ST19. Next, in Step ST20, it is determined whether the hot-water outflow temperature h3 is equal to or less than the target floor-heating temperature TL. When the hot-water outflow temperature h3 is higher than the target floor-heating temperature TL, the process proceeds to Step ST19. When the hot-water outflow temperature h3 is equal to or less than the target floor-heating temperature TL, the process proceeds to Step ST17 in FIG. 2. Then, in Step ST17 in FIG. 2, the switching of the four-way valve 6 is controlled such that the refrigerant circuit 10 is brought into a heating cycle.

According to the defrosting operation end processing in FIG. 7, the hot-water outflow temperature adjustment can be accurately ended and the defrosting operation and the hot-water outflow temperature adjustment can be efficiently performed.

### Reference Signs List

- 1:: heat pump-type hot-water heating device
- 2:: outdoor unit
- 3:: indoor heating device
- 4:: floor heating device
- 5:: compressor
- 6:: four-way valve
- 7:: water-refrigerant heat exchanger
- 8:: expansion valve
- 9:: outdoor heat exchanger
- 10:: refrigerant circuit
- 11:: outdoor fan
- 12:: discharge pressure sensor
- 13:: discharge temperature sensor
- 14:: refrigerant temperature sensor
- 15:: water pump
- 16:: indoor-heating flow-rate regulating valve
- 17:: indoor heat exchanger
- 18:: first hot-water circulation circuit
- 19:: indoor fan
- 20:: room temperature sensor
- 21:: hot-water outflow temperature sensor
- 25:: floor-heating flow-rate regulating valve
- 26:: floor heating panel
- 27:: second hot-water circulation circuit
- 30:: controller
- 32:: control means
- 33:: hot-water outflow-temperature control means
- 34:: defrosting operation control means
- TL:: target floor-heating temperature
- TH:: target indoor-heating temperature

## Claims

1. A heat pump-type hot-water heating device comprising:
a refrigerant circuit where a compressor, a flow path switching means, a water-refrigerant heat exchanger configured to exchange heat between water and a refrigerant, and an outdoor heat exchanger are connected by a pipe;
a hot-water circulation circuit where the water-refrigerant heat exchanger, a water pump, a low-temperature heating terminal, and a high-temperature heating terminal are connected by a pipe and by an action of the water pump configured to supply hot water from the water-refrigerant heat exchanger to the low-temperature heating terminal and the high-temperature heating terminal in parallel and reflux a condensate from each heating terminal to the water-refrigerant heat exchanger;
a hot-water outflow temperature detecting means configured to detect a hot-water outflow temperature of hot water that has passed through the water-refrigerant heat exchanger;
a hot-water outflow-temperature control means configured to control the flow path switching means such that the water-refrigerant heat exchanger functions as a condenser and to drive the compressor such that, when heating operation is performed with at least one of the high-temperature heating terminal and the low-temperature heating terminal, the hot-water outflow temperature reaches a target hot-water outflow temperature set according to a load of the heating operation; and
a defrosting operation control means configured to control the flow path switching means such that the outdoor heat exchanger functions as a condenser and to drive the compressor to perform defrosting operation of the outdoor heat exchanger, wherein
the defrosting operation control means is configured to start the defrosting operation in a state in which the hot-water outflow temperature is higher than the target hot-water outflow temperature when a decrease amount per unit time of the target hot-water outflow temperature has become equal to or more than a decrease amount threshold.

2. The heat pump-type hot-water heating device according to claim 1, wherein the defrosting operation control means is configured to start the defrosting operation when simultaneous operation of the high-temperature heating terminal and the low-temperature heating terminal has been switched to single operation of the low-temperature heating terminal.

3. The heat pump-type hot-water heating device according to claim 1 or 2, wherein the defrosting operation control means is configured to start the defrosting operation when continuous operation of the high-temperature heating terminal has continued for a predetermined period of time or more.

4. The heat pump-type hot-water heating device according to claim 1 or 2, wherein the defrosting operation control means is configured to end the defrosting operation when a condition indicating that frost of the outdoor heat exchanger has completely melted is satisfied.

5. The heat pump-type hot-water heating device according to claim 1 or 2, wherein the defrosting operation control means is configured to end the defrosting operation when the hot-water outflow temperature has reached the target hot-water outflow temperature.

6. The heat pump-type hot-water heating device according to claim 1 or 2, wherein the refrigerant circulating through the refrigerant circuit is R290.
